Europäisches Patentamt

European Patent Office

Office européen des brevets

(19)

(11) Numéro de publication : **0 126 662**
**B1**

(12) **FASCICULE DE BREVET EUROPÉEN**

(45) Date de publication du fascicule du brevet :
03.12.86

(51) Int. Cl.⁴ : **G 01 G 13/285**, G 01 G 13/29,
G 01 G 13/12

(21) Numéro de dépôt : **84400762.5**

(22) Date de dépôt : **17.04.84**

(54) **Procédé et dispositif de dosage pondéral d'une poudre.**

(30) Priorité : **18.04.83 FR 8306297**

(43) Date de publication de la demande :
**28.11.84 Bulletin 84/48**

(45) Mention de la délivrance du brevet :
**03.12.86 Bulletin 86/49**

(84) Etats contractants désignés :
**AT BE CH DE GB IT LI LU NL SE**

(56) Documents cités :
CH-A-  559 353
DE-A- 2 417 595
DE-A- 2 810 810
FR-A- 2 381 999
GB-A- 2 093 609

(73) Titulaire : **MANUFACTURE DE MACHINES DU HAUT-RHIN S.A. (MANURHIN)**
**10, rue de Soultz**
**F-68100 Mulhouse (FR)**

(72) Inventeur : **Boyer, Richard**
**3 Impasse de l'Acier**
**F-03300 Cusset (FR)**
Inventeur : **Diquet, Joel**
**8, rue Couturier**
**F-03200 Vichy (FR)**

(74) Mandataire : **Martin, Jean-Jacques et al**
**Cabinet REGIMBEAU 26, Avenue Kléber**
**F-75116 Paris (FR)**

## Description

La présente invention concerne un procédé et un dispositif de dosage pondéral d'une poudre.

Elle vise à perfectionner les procédés et dispositifs connus mettant en œuvre une balance munie d'un récipient de pesage et de moyens de mesure en continu du poids effectif du contenu éventuel du récipient, constitués par des capteurs de force tels que des jauges de contrainte, des cellules de charge piézo-électriques, une balance de Cotton, une corde vibrante ou autre dispositif analogue, qui pilotent, par l'intermédiaire d'une électronique appropriée, des moyens positifs d'acheminement de la poudre à doser vers le récipient de pesage, constitués par des systèmes de déversement tels qu'une goulotte vibrante, un bol vibrant, une vis d'Archimède, une vanne commandée, un tapis roulant, ou autre dispositif analogue.

Habituellement, on pratique ce mode de dosage pondéral en acheminant la poudre à doser vers le récipient de pesage selon deux débits successifs, à savoir en premier lieu un débit comparativement important permettant d'introduire rapidement dans le récipient de pesage un poids de poudre plus ou moins proche de la valeur prédéterminée finale à obtenir, ou dose, puis en second lieu un débit comparativement faible permettant d'aboutir à cette valeur prédéterminée finale ou du moins de l'approximer.

Dans l'art antérieur, ces deux débits sont prédéterminés et constants, et correspondent par exemple, si les moyens positifs d'acheminement de la poudre à doser vers le récipient de pesage sont constitués par une goulotte vibrante, respectivement à deux amplitudes de vibration prédéterminées de celle-ci.

Alors, l'art antérieur fait appel à deux procédés pour déterminer la transition entre le débit comparativement important et le débit comparativement faible : ces débits étant pré-réglés, on décide d'opérer la transition soit au bout d'un temps prédéterminé, soit à une valeur prédéterminée du poids du contenu du récipient de pesage, correspondant à un pré-dosage.

Dans le premier cas, étant donné que le débit réel de poudre n'est qu'approximativement constant au cours de la pesée et, à plus forte raison, d'une pesée sur l'autre en raison de variations possibles de l'état physique de la poudre, et par exemple de sa granulométrie et de son taux d'humidité, influant sur sa facilité d'écoulement, on est conduit par mesure de sécurité à conserver une quantité assez grande de poudre à déverser en débit comparativement faible, ce qui allonge le temps effectif de pesée. Dans le second cas, également en raison des variations inévitables dans l'état physique de la poudre à peser, la durée du déversement en débit comparativement important varie, ce qui se répercute sur le temps total de la pesée.

Dans l'un et l'autre cas, le dosage se termine, en débit comparativement faible, lorsque les moyens de mesure en continu du poids effectif du contenu du récipient détectent une valeur de ce poids égale à la valeur prédéterminée finale ou dose à obtenir, ou proche de celle-ci et inférieure à celle-ci d'une quantité corespondant à l'erreur de jetée, c'est-à-dire au poids de poudre encore délivré par les moyens positifs d'acheminement après interruption de leur fonctionnement ; selon l'état physique de la poudre à peser et, dans le premier cas ci-dessus, en fonction du poids de poudre effectivement reçu en débit comparativement important par le récipient de pesage, la durée de l'écoulement en débit comparativement faible est également amenée à varier.

Il en résulte que, quelle que soit celle de ces deux solutions actuellement connues que l'on adopte, la durée totale d'un cycle de dosage varie d'un cycle à l'autre, ce qui est particulièrement gênant lorsque l'on cherche à obtenir une cadence à la fois élevée et régulière et lorsque le dosage pondéral est inclus dans un cycle immuable d'opérations pour lesquelles on ne peut pas donner d'ordre de priorité.

Un autre procédé connu, décrit par CH-A-559 353 et plus particulièrement destiné au cas de doses importantes, déversées dans le récipient de pesage par des moyens d'acheminement à débit important tels que des vis d'Archimède, consiste à calculer et comparer à chaque instant :

— la différence $G$ entre une valeur de consigne de poids de poudre à obtenir et une valeur mesurée par pesage du récipient, cette valeur mesurée résultant d'une part du poids de poudre effectivement contenu à cet instant dans le récipient et d'autre part de l'effort appliqué à ce dernier, vers le bas, par la poudre en chute,

— une valeur $\Delta G/\Delta t \cdot Z$ de cette différence, calculée afin de tenir compte d'une part d'une erreur de jetée probable calculée en fonction de l'évolution de cette différence dans le temps, et d'autre part du fait que la valeur mesurée ne coïncide pas avec le poids de poudre effectivement contenu par le récipient, pour interrompre le fonctionnement des moyens d'acheminement lorsque cette différence $G$ coïncide avec sa valeur calculée $\Delta G/\Delta t \cdot Z$, afin qu'après écoulement d'un résidu de poudre après cette interruption, le poids de poudre effectivement contenu par le récipient coïncide avec la valeur de consigne.

La durée totale d'un cycle de dosage varie également dans ce cas d'un cycle à l'autre ; en outre, la mise en œuvre de ce procédé nécessite des calculs complexes, c'est-à-dire l'utilisation de moyens de calcul importants.

Le but de la présente invention est de perfectionner ces procédés connus en proposant un procédé et un dispositif de dosage permettant d'associer, à la grande précision de dosage requise, une durée déterminée, constante, du cycle de dosage.

En outre, dans un souci de simplicité et d'économie, ce but doit être atteint sans recours à des calculs complexes, c'est-à-dire sans recours à un calculateur.

A cet effet, le procédé de dosage pondéral d'une poudre conforme à l'invention, mettant en œuvre de façon connue en soi une balance munie d'un récipient de pesage et de moyens de mesure en continu du poids effectif du contenu éventuel du récipient, et des moyens positifs d'acheminement de la poudre à doser vers le récipient de pesage, ce procédé consistant, lors d'un cycle de dosage, à faire fonctionner les moyens d'acheminement d'un instant initial où le récipient est théoriquement vide à un instant final où le récipient a reçu des moyens d'acheminement, depuis l'instant initial, un poids de poudre d'une valeur prédéterminée et inférieure à une valeur prédéterminée finale à obtenir, ou dose, d'une quantité correspondant à une erreur de jetée moyenne des moyens d'acheminement, à interrompre à cet instant final le fonctionnement des moyens d'acheminement et à laisser ensuite s'écouler dans le récipient la poudre résiduelle correspondant à l'erreur de jetée effective, se caractérise en ce que l'on prédétermine ledit instant final en référence à l'instant initial, ainsi qu'une évolution idéale du poids de poudre reçu par le récipient en fonction du temps, de l'instant initial à l'instant final, et en ce que, à chaque instant dudit fonctionnement des moyens d'acheminement, on compare le poids effectif de poudre reçu par le récipient depuis l'instant initial et un poids théorique conforme à ladite évolution idéale, et l'on agit en continu sur ledit fonctionnement en fonction du résultat de cette comparaison, pour augmenter le débit si le poids effectif est inférieur au poids théorique à l'instant considéré ou pour réduire le débit si le poids effectif est supérieur au poids théorique à l'instant considéré, et adapter ainsi l'évolution du poids effectif de poudre reçu depuis l'instant initial par le récipient, lors du fonctionnement des moyens d'acheminement, à l'évolution idéale.

Ce mode d'action en continu sur les moyens d'acheminement permet de compenser à chaque instant toutes les influences néfastes qui perturbent leur débit effectif, qu'elles soient imputables à la poudre à doser, et dues par exemple à des granulométrie, densité et hygrométrie non constantes de la poudre, ou imputables aux moyens d'acheminement eux-mêmes et par exemple à des variations de la tension secteur, ou à un échauffement de ces moyens, entraînant une modification de leur rendement.

Avantageusement, on prédétermine l'évolution idéale du poids de poudre reçu dans le récipient en fonction du temps de façon à définir un débit comparativement important de l'instant initial à un instant intermédiaire prédéterminé en référence à l'instant initial, et un débit comparativement faible de l'instant intermédiaire à l'instant final, ce qui permet à la fois de réduire la durée totale du cycle de dosage tout en bénéficiant d'un débit final très faible, ce qui réduit l'erreur commise sur l'erreur de jetée ; en effet, la compensation automatique évoquée plus haut permet d'associer à l'instant intermédiaire la réception, par le récipient de pesage, d'une quantité bien déterminée de poudre en débit comparativement important, ce qui facilite le dosage final lorsque l'on passe en débit comparativement faible car le poids de poudre restant à délivrer peut être réduit au minimum, ce qui augmente la précision de la pesée tout en conservant une cadence élevée et régulière au dispositif de dosage.

Quelle que soit l'évolution idéale que l'on choisisse, et notamment dans le cas de ce mode de mise en œuvre préféré, on obtient par le procédé selon l'invention une adaptation aussi étroite que possible, à cette évolution idéale, de l'évolution du poids effectif de poudre reçu par le récipient, ce qui permet d'obtenir une durée constante du cycle de dosage, correspondant à la durée séparant l'instant final de l'instant initial augmentée d'une durée comparativement faible et aisément prédéterminable, par exemple empiriquement, suffisant à l'écoulement de la quantité de poudre correspondant à l'erreur de jetée effective, tout en respectant une évolution du débit propice à une grande précision du dosage, à savoir une évolution comportant, en fin de cycle, un abaissement sensible du débit.

La mise en œuvre du procédé conforme à l'invention ne nécessite pas pour autant l'utilisation de moyens de calcul importants.

En effet, la présente invention propose également, pour la mise en œuvre du procédé ci-dessus, un dispositif de dosage pondéral d'une poudre comportant de façon connue en soi :

— une balance munie d'un récipient de pesage et de moyens de mesure en continu du poids effectif du contenu éventuel du récipient, émettant à chaque instant un premier signal représentatif de ce poids,

— des moyens positifs d'acheminement d'une poudre à doser vers le récipient de pesage, débouchant à l'aplomb du récipient, et se caractérisant en ce qu'il comporte en outre :

— des premiers moyens de consigne, pour consigner une valeur prédéterminée finale du poids de poudre à obtenir, ou dose, et une quantité prédéterminée correspondant à une erreur de jetée moyenne des moyens d'acheminement,

— des deuxièmes moyens de consigne, pour consigner une évolution idéale du poids de poudre reçu par le récipient en fonction du temps, au cours d'un cycle de dosage,

— un premier comparateur, comparant à chaque instant le premier signal d'une part au moins à un seuil prédéterminé représentatif de ladite valeur prédéterminée finale réduite de ladite quantité prédéterminée et d'autre part à un seuil représentatif d'un poids théorique à cet instant, conformément à ladite évolution théorique, pour émettre un deuxième signal en fonction de cette comparaison,

— des moyens d'asservissement continu du fonctionnement et du débit des moyens d'acheminement au deuxième signal.

En correspondance avec le mode de mise en

œuvre préféré du procédé évoqué plus haut, l'évolution idéale consignée dans les deuxièmes moyens de consigne peut avantageusement se dissocier en deux phases à raison d'une première phase de débit théorique comparativement important et d'une deuxième phase de débit théorique comparativement faible, la transition entre les deux phases correspondant à une valeur prédéterminée intermédiaire entre ladite valeur nulle et ladite valeur prédéterminée finale réduite de ladite quantité prédéterminée, valeur intermédiaire associée à un instant prédéterminé intermédiaire entre l'instant initial et l'instant final à chaque cycle de dosage.

Pour prévenir les conséquences d'un dosage erratique, dû par exemple à une erreur de jetée s'écartant de façon inadmissible de l'erreur de jetée moyenne prédéterminée par exemple empiriquement, on prédétermine une limite admissible supérieure et une limite admissible inférieure autour de la valeur prédéterminée finale ou dose et, après avoir laisser s'écouler dans le récipient la poudre résiduelle correspondant à l'erreur de jetée effective après l'instant final précité, on compare le poids effectif de poudre reçu par le récipient à ces limites, pour définir une pesée bonne ou mauvaise selon que, respectivement, ce poids effectif est situé entre ces limites ou en dehors d'elles ; ce contrôle s'effectue à l'expiration d'un délai prédéterminé après ledit instant final, ce délai étant établi de telle sorte qu'il soit suffisant pour permettre à la quantité de poudre correspondant à l'erreur de jetée effective de s'écouler dans le récipient.

En outre, pour augmenter la précision du dosage, on détermine à chaque instant le poids effectif de poudre reçu des moyens d'acheminement, par le récipient, depuis l'instant initial en déduisant, de la valeur mesurée fournie à l'instant considéré par les moyens de mesure, la valeur mesurée fournie par ces derniers à l'instant initial ; à cet effet sont prévus des moyens dits « de remise à zéro » des moyens de mesure en continu du poids effectif du contenu du récipient, à chaque cycle de dosage ; il est ainsi possible de compenser notamment la dérive des moyens de mesure.

En outre, lorsque l'on désire doser des produits pulvérulents présentant un risque d'adhérence avec les parois du godet, il est alors possible, en début de cycle de dosage, de détecter l'adhérence d'une quantité excessive de poudre lors du cycle précédent, s'étant traduite par un vidage incomplet du récipient de pesage, c'est-à-dire par l'évacuation hors de celui-ci d'une dose incomplète, ou bien l'évacuation, lors de ce cycle précédent, d'une quantité excessive de poudre accumulée au fur et à mesure des cycles, par adhérence, se traduisant par l'évacuation d'une dose excessive.

A cet effet, la valeur du poids effectif du contenu du récipient, mesurée par les moyens de mesure après que l'on ait provoqué le vidage du récipient à la fin d'un cycle de dosage, pouvant être positive ou négative au lieu d'être nulle, compte tenu de la remise à zéro effectuée à ce cycle, selon que, respectivement, on a en réalité évacué moins que la dose ou plus que la dose, on prédétermine une limite supérieure dite « positive » et une limite inférieure dite « négative » à la valeur de la mesure fournie à l'instant initial par les moyens de mesure et, selon que cette valeur est située entre ou en dehors de ces limites, respectivement, on définit un dosage précédent bon ou mauvais en refusant le déroulement du cycle si cette valeur dépasse la limite supérieure.

D'autres caractéristiques et avantages de l'invention ressortiront de la description ci-dessous, relative à un mode de mise en œuvre non limitatif, ainsi que des dessins annexés qui font partie intégrante de cette description.

La figure 1 montre une vue en perspective d'un dispositif de dosage pondéral mettant en œuvre l'invention.

La figure 2 montre une vue de la partie « balance » de ce dispositif, en coupe partielle.

La figure 3 est un graphique indiquant d'une part un exemple d'évolution idéale du poids de poudre reçu par le récipient de pesage en fonction du temps (courbe I) et d'autre part un exemple d'évolution réelle de ce poids (courbe II) ; le temps t est porté en abscisse et le poids P de poudre en ordonnée.

La figure 4 est un schéma synoptique de l'électronique associée à la balance pour la mise en œuvre du procédé selon l'invention.

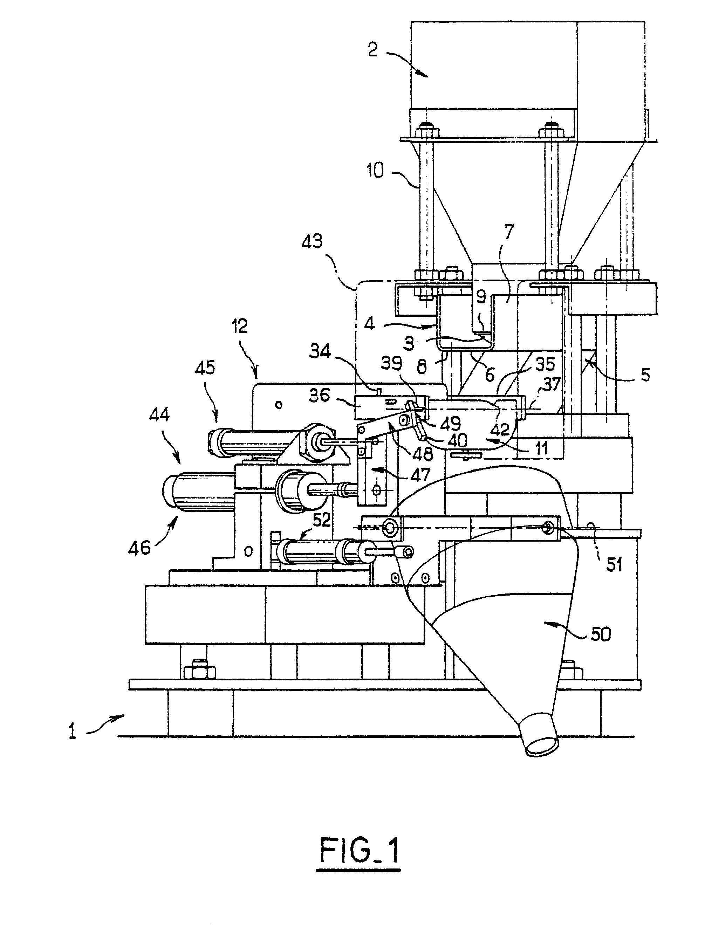

On se référera en premier lieu à la figure 1, où l'on a représenté un dispositif selon l'invention monté sur un bâti 1 qui servira par la suite de référence de fixité.

Vers le haut, le bâti 1 porte de façon solidaire une trémie 2 faisant office de réserve de poudre et débouchant vers le bas, par une embouchure en biseau 3, sur le fond 6, plat et approximativement horizontal, d'une goulotte 4 portée par le bâti 1 par l'intermédiaire de moyens moteurs 5 aptes à lui communiquer un mouvement vibratoire selon une amplitude proportionnelle à une tension électrique d'alimentation de ces moyens moteurs 5, comme il est connu en soi de l'homme du métier.

A l'exception d'un bord de déversement 8, rectiligne, horizontal, les bords du fond 6 de la goulotte 4 sont munis de rebords 7 en saillie vers le haut et qui épousent extérieurement la partie inférieure de la trémie 2, autour de l'embouchure 3 de celle-ci ; compte tenu de sa forme en biseau, cette embouchure 3 présente vers le bord 8, à distance de celui-ci et au-dessus du fond 6, un bord inférieur rectiligne 9, horizontal et parallèle au bord 8, et qui constitue sa zone de plus haut niveau ; la distance verticale séparant le bord 9 du niveau moyen du fond 6 de la goulotte 4 détermine la formation, sur ce fond 6, d'un tapis de poudre présentant cette hauteur et que le mouvement vibratoire de la goulotte 4, dû aux moyens moteurs 5 lorsqu'ils sont en service, fait migrer vers le bord 8 et se déverser hors de la goulotte 4 par celui-ci ; la hauteur du tapis ainsi formé sur le fond 6 de la goulotte 4 peut être réglée par réglage du niveau du bord 9 par rapport au niveau moyen du fond 6 de la goulotte 4 ; dans l'exemple illustré où ce niveau moyen du fond 6 est fixe par rapport au bâti 1, ce réglage est obtenu par réglage du niveau de la trémie 2, et par exemple par réglage de la hauteur de colonnes 10 de liaison de cette dernière avec le bâti 1.

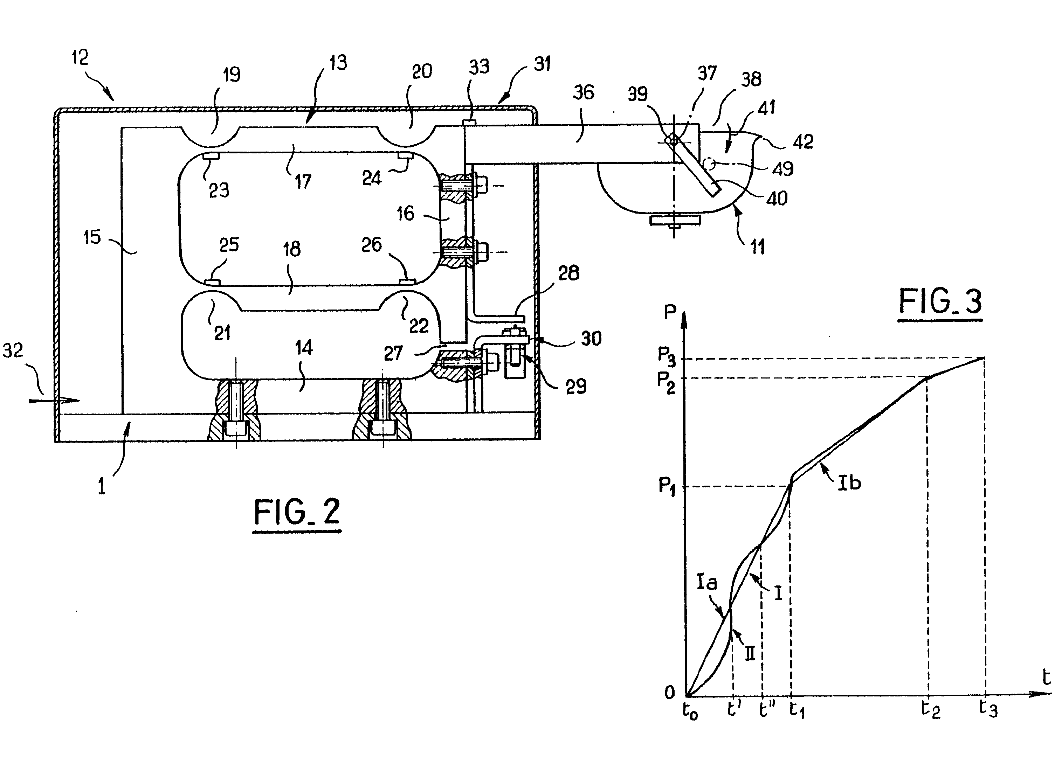

Pour recueillir la poudre tombant ainsi de la goulotte 4 par le bord de déversement 8 de celle-ci lorsque les moyens moteurs 5 sont en service, il est prévu sous le bord 8, à l'aplomb de celui-ci, un récipient de pesage 11 en forme de godet, formant partie intégrante une balance 12 également visible à la figure 2.

Cette figure 2 illustre à titre d'exemple non limitatif une balance 12 présentant, à titre de moyens de mesure du poids du contenu éventuel du récipient de pesage 11, un capteur 13 à jauges de contrainte.

Le capteur 13 illustré, du type fabriqué par la Société « Transducers, Inc. », et commercialisé par la firme GEC Composants sous la référence C462-02-10 P1, comporte une embase horizontale 14 solidarisée avec le bâti 1 du dispositif et portant de façon solidaire et rigide un montant vertical 15 auquel un deuxième montant vertical 16 est relié par deux traverses 17, 18 approximativement horizontales, parallèles entre elles et superposées à l'aplomb l'une de l'autre, moyennant un écartement relatif ; à leurs liaisons avec les montants 15 et 16, les traverses 17 et 18 présentent des étranglements, respectivement 19 et 20 en ce qui concerne la traverse supérieure 17, et 21 et 22 en ce qui concerne la traverse inférieure 18, si bien que les montants 15 et 16 et les traverses 17 et 18 définissent un parallélogramme déformable élastiquement selon un plan moyen vertical commun aux montants et traverses ; à proximité immédiate de chacun des rétrécissements est disposée, sur la traverse 17 ou 18 correspondante, une jauge de contrainte, respectivement 23, 24, 25, 26, ces différentes jauges de contrainte étant réunies en un montage connu de l'homme du métier, de façon à fournir une tension électrique représentative de la déformation éventuelle du parallélogramme constitué par les montants 15 et 16 et les traverses 17 et 18 à un instant donné ; pour autoriser une telle déformation dans le sens de la descente du montant 16 à partir d'une position d'équilibre du parallélogramme, il est prévu entre l'extrémité inférieure de ce montant 16 et l'embase 14 un jeu 27 ; le débattement dans ce sens est néanmoins limité par un système de butée mettant en œuvre une patte horizontale 28 solidaire du montant 16 à proximité de l'extrémité inférieure de celui-ci et l'extrémité supérieure d'une vis 29 que l'on peut visser plus ou moins, suivant une direction verticale, dans une patte 30 quant à elle solidaire de l'embase 14, sous la patte 28 et à distance de celle-ci, de telle sorte qu'après une course déterminée du montant 16 dans le sens descendant à partir de la position d'équilibre du parallélogramme, la patte 28 vienne buter contre l'extrémité supérieure de la vis 29.

Le capteur 13 ainsi constitué est logé à l'intérieur d'un boîtier 31 en matériau étanche, présentant une admission pour de l'air sous pression, schématisée en 32, et deux fentes verticales 33 et 34 aménagées à proximité du montant 16 pour autoriser la sortie, hors du carter 1, de deux bras horizontaux 35 et 36 portant le récipient de pesage 11 à l'extérieur du boîtier 31 ; l'admission d'air sous pression en 32 dans le boîtier 31, avec évacuation de cet air par les fentes 33 et 34 qui constituent les seules ouvertures de ce boîtier, provoque d'une part à l'intérieur du boîtier 31 une circulation d'air qui favorise les échanges thermiques entre les différentes jauges de contrainte 23, 24, 25, 26 et uniformise ainsi les conditions de température dans lesquelles elles se trouvent placées, et d'autre part place l'intérieur du boîtier 31 en légère surpression interne d'air, l'évacuation de cet air par les fentes 33 et 34 empêchant l'entrée de poudre à l'intérieur du boîtier 31, ce qui, de façon générale, empêche l'encrassement de celui-ci et, dans le cas particulier de poudres dangereuses, communique à la balance 12 toute sécurité d'emploi ; on notera qu'à cet effet, également, toutes les parties électriques du dispositif sont isolées à l'intérieur de boîtiers, comme c'est par exemple le cas des moyens moteurs 5 dont le boîtier a été schématisé en trait mixte, en 43, à la figure 1.

Comme il ressort plus particulièrement de la figure 1, les bras 35 et 36 sont horizontaux, placés à un même niveau, et distants l'un de l'autre de façon à recevoir entre eux le récipient de pesage 11 ; ils sont disposés symétriquement l'un de l'autre par rapport au plan vertical moyen du capteur 13, c'est-à-dire des montants 15 et 16 et des traverses 17 et 18 de celui-ci, plan selon lequel s'effectue la déformation du parallélogramme défini par ces montants 15 et 16 et ces traverses 17 et 18.

A proximité de leur extrémité respective la plus éloignée du montant 16, les deux bras 35 et 36 portent un palier respectif recevant un tourillon respectif du récipient de pesage 11, pour définir un axe 37 de pivotement de ce récipient 11 par rapport aux deux bras 35 et 36 ; cet axe 37 est horizontal et perpendiculaire au plan moyen du capteur 13 défini plus haut ; il est disposé par rapport au centre de gravité du récipient 11 de telle sorte que celui-ci tende naturellement à occuper une position d'équilibre dans laquelle il présente vers le haut, en pratique à l'aplomb du bord 8 de déversement de la goulotte 4, sa seule ouverture 38, pour recevoir la poudre se déversant de la goulotte 4 lorsque les moyens moteurs 5 de celle-ci sont en service.

Pour permettre l'application, au récipient de pesage 11, d'un mouvement de pivotement autour de l'axe 37 par rapport aux bras 35 et 36, à partir de la position d'équilibre ainsi définie, afin de provoquer son déversement, l'un 39 des tourillons de ce récipient 11 porte de façon solidaire, au-delà du bras correspondant 36 par rapport à ce récipient 11, un levier rectiligne 40 orienté radialement par rapport à l'axe 37.

Si l'on se réfère à la position d'équilibre du récipient de pesage 11, illustrée aux figures 1 et 2, et compte tenu d'un sens prédéterminé 41 de pivotement au déversement, correspondant à un mouvement descendant du bord de ce récipient 11 le plus éloigné du capteur 13, bord d'ailleurs muni de préférence à cet effet d'un bec verseur 42, les zones du levier 40 respectivement de plus en plus éloignées de l'axe 37 sont situées en dessous de celui-ci, de plus en plus loin du capteur 13 ; dans cette position d'équilibre, l'inclinaison moyenne du levier 40 par rapport à la verticale est par exemple de l'ordre de 30°, ce chiffre étant donné à titre d'indication non limitative.

Avec le levier 40 ainsi orienté coopère un dispositif 44 de manœuvre du récipient 11 au basculement.

Ce dispositif 44 est monté sur le bâti à côté de la balance 12, c'est-à-dire du même côté de l'axe 37 que celle-ci et comporte un vérin 45 et un amortisseur hydraulique 46 dont les corps respectifs sont solidarisés avec le bâti 1 et occupent une position horizontale, en dessous du niveau de l'axe 37, et dont les tiges respectives sont solidarisées avec une plaque commune 47 portant de façon solidaire, par l'intermédiaire d'une potence 48, un doigt 49 de sollicitation du levier 40 avec le côté amont duquel, en référence au sens de rotation 41, ce doigt 49 peut venir en contact, avec possibilité de glissement sur lui, après franchissement d'un jeu fonctionnel de quelques dixièmes de millimètre ; la position d'équilibre du récipient 11, dans laquelle son ouverture 38 est tournée vers le haut, correspond à la sortie maximale des tiges respectives du vérin 45 et de l'amortisseur hydraulique 46, et une rentrée de ces tiges, provoquée par le vérin 45 et subie par l'amortisseur 46 par l'intermédiaire de la plaque 47, provoque l'application au levier 40, par le doigt 49, d'un effort présentant une composante dans le sens de rotation 41, se traduisant par le basculement du récipient 11 autour de l'axe 37 par rapport aux bras 35 et 36 ; la longueur du levier 40, mesurée radialement en référence à l'axe 37, est déterminée en fonction des positions relatives des différents éléments du dispositif de manœuvre 44 et de l'axe 37, de telle sorte que le mouvement de basculement du récipient 11 sous l'action du dispositif 44 puisse s'effectuer sur au moins 90°, afin d'assurer un maximum de probabilité de viande complète du récipient 11 lors de son basculement ; un mouvement de sortie de retour des tiges respectives du vérin 45 et de l'amortisseur hydraulique 46 autorise un retour par gravité du récipient 11 à sa position d'équilibre, à laquelle son ouverture 38 est tournée vers le haut.

Pour recevoir le contenu du récipient 11 lors de son déversement est prévu, en dessous de celui-ci, un entonnoir de transit 50 avantageusement monté au pivotement, par rapport au bâti 1 du dispositif, autour d'un axe horizontal fixe 51 ; l'entonnoir de transit 50 peut ainsi pivoter, sous l'action de moyens tels qu'un vérin 52 dont le corps est articulé sur le bâti 1 et la tige sur l'entonnoir 50, entre deux positions correspondant respectivement à l'évacuation du contenu du récipient de pesage 11, au déversement de celui-ci, vers des moyens (non représentés) d'acheminement de la poudre vers un traitement ultérieur, dans le cas d'une dose considérée comme bonne par des moyens automatiques qui seront définis plus loin, ou à l'évacuation de ce contenu vers le rebut ou vers des moyens de recyclage dans la trémie 2 dans le cas d'une dose considérée comme mauvaise par ces moyens automatiques.

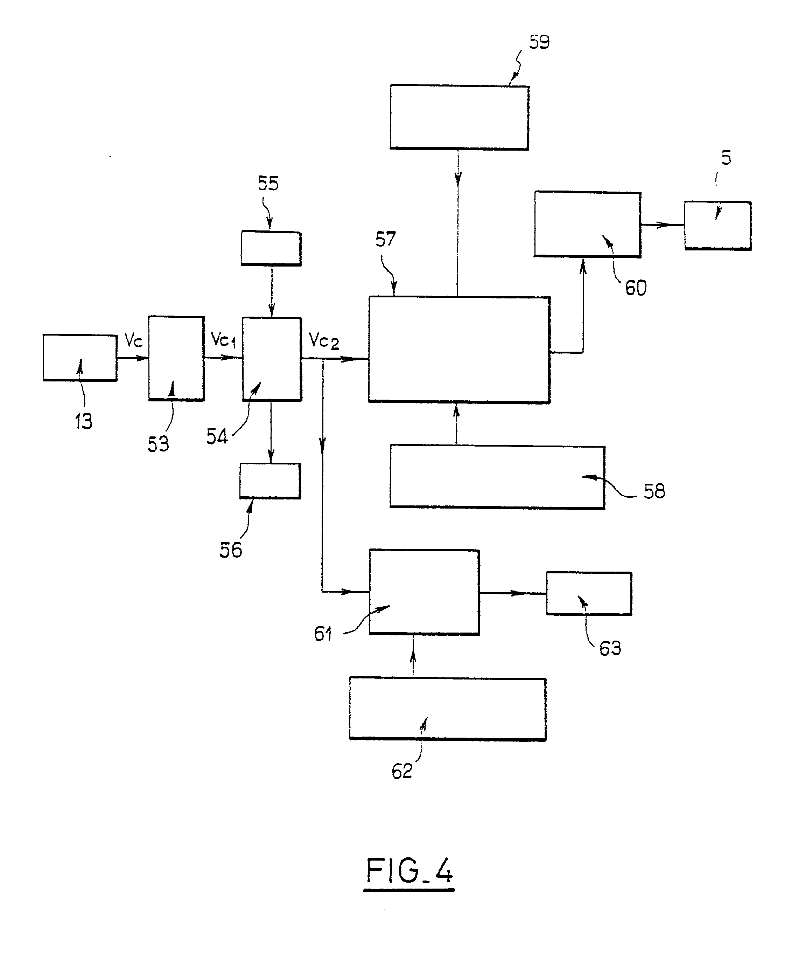

En vue de la mise en œuvre du procédé selon l'invention, le dispositif qui vient d'être décrit est muni d'une électronique de commande qui va être décrite à présent en référence à la figure 4.

On retrouve sur cette figure le capteur 13 qui, de façon connue en soi, présente une sortie par laquelle il délivre en continu, lorsqu'il est en service, un signal électrique $V_c$ représentatif du poids effectif du contenu éventuel du récipient de pesage 11, signal $V_c$ pouvant avantageusement être constitué par une tension électrique comme il est connu en soi.

La sortie du capteur 13 est reliée électriquement à l'entrée d'un circuit 53 de mise en forme du signal $V_c$ ; cette mise en forme du signal consiste en une amplification, un filtrage, un étalonnage, et les circuits 53 délivrent en sortie un signal $V_{c1}$ proportionnel au poids effectif du contenu éventuel du récipient 11.

Pour éviter les erreurs dues aux dérives du capteur 13 en température et à la poudre restant éventuellement dans le récipient de pesage 11 avant le début d'un cycle de dosage, le signal $V_{c1}$ de sortie du circuit 53 est acheminé à l'entrée d'un circuit 54 de remise à zéro qui, à tout instant t d'un cycle de dosage, retranche du signal $V_{c1}$ issu du circuit 53 le signal issu de celui-ci à l'instant initial $t_0$ du cycle de dosage, c'est-à-dire juste avant l'introduction de poudre dans le récipient 11 au cours de ce cycle, et mémorisé à cet instant $t_0$ dans le circuit 54 par des moyens appropriés.

Le signal résultant de cette soustraction constitue le signal $V_{c2}$ de sortie du circuit 54, de même nature que $V_c$.

Outre des moyens de mémorisation du signal $V_{c1}$ issu du circuit 53 à l'instant initial $t_0$ d'un cycle de dosage, le circuit de remise à zéro 54 comporte des moyens de consigne 55 pour consigner deux limites de remise à zéro, un comparateur pour comparer la remise à zéro effective avec ces limites, et des moyens d'alarme 56 pilotés par le comparateur en fonction du résultat de cette comparaison, et en pratique si la remise à zéro effective se trouve en dehors de ces deux limites.

Plus précisément, les deux limites de remise à zéro susceptibles d'être ainsi consignées consistent en une limite supérieure dite « positive » prédéterminée et une limite inférieure dite « négative » également prédéterminée que l'on fixe à la valeur mesurée fournie par les moyens de mesure à l'instant initial de chaque cycle, et plus précisément à la valeur de $V_{c1}$ à l'instant $t_0$, et le

comparateur du circuit 54 détermine un dosage précédent bon ou mauvais selon que cette valeur est située entre ou en dehors de ces limites, respectivement, en déclenchant une alarme dans ce dernier cas et en refusant le déroulement d'un cycle de dosage si la valeur de $V_{c1}$ à l'instant $t_0$ dépasse ladite limite supérieure consignée.

En effet, il convient, au début de chaque cycle, de détecter si, lors du vidage de la dose contenue dans le récipient 11 à la fin du cycle précédent, une quantité excessive de poudre n'est pas restée collée sur les parois du récipient, avec pour résultat la délivrance hors du récipient 11 d'une dose trop faible de poudre lors de ce cycle précédent, auquel cas la limite supérieure de remise à zéro est dépassée du fait de la présence d'une quantité excessive de poudre dans le récipient 11 après vidage de celui-ci, ou bien si, lors du vidage du récipient 11 au cours du cycle précédent, de petites quantités de poudre accumulées sur les parois du récipient 11 lors des vidages précédents, sans que pour autant les doses alors délivrées se soient situées en dehors des tolérances consignées, ne sont pas évacuées hors du récipient en même temps que la dose pesée avec pour résultat la délivrance d'une dose trop forte, auquel cas la valeur $V_{c1}$ fournie à l'instant $t_0$ est inférieure à la limite inférieure dite « négative » consignée ; dans le premier cas, il convient de signaler la délivrance d'une dose trop faible, et dans le deuxième cas la délivrance d'une dose trop forte et si la dose délivrée au cycle précédent est trop faible, ce qui signifie la présence dans le récipient 11, à l'instant initial, d'une quantité excessive de poudre y adhérant, il convient d'empêcher le déroulement d'un nouveau cycle jusqu'à ce que cette poudre ait été ôtée du récipient.

Le signal de sortie $V_{c2}$ fourni par le circuit de remise à zéro 54 ainsi constitué, signal dont on remarquera qu'il est représentatif, à chaque instant d'un cycle de dosage, du poids effectif de poudre reçu de la goulotte 4, par le récipient 11, depuis l'instant initial $t_0$ du cycle, constitue le signal d'entrée d'un circuit 57 de commande de l'acheminement de poudre à doser vers le récipient de pesage 11 par la goulotte vibrante 4.

A ce circuit 57 sont associés des premiers moyens de consigne 58, pour consigner une valeur prédéterminée finale du poids de poudre à obtenir, c'est-à-dire une valeur prédéterminée que le signal $V_{c2}$ doit égaler pour que la dose de poudre contenue dans le récipient 11 à la fin d'un cycle de dosage corresponde à la dose désirée, et une quantité prédéterminée correspondant à une erreur de jetée moyenne des moyens d'acheminement de poudre vers le récipient 11, ici constituées par la goulotte vibrante 4, cette erreur de jetée moyenne pouvant avantageusement être déterminée empiriquement avant la mise en route d'une série de cycles de dosage mettant en œuvre une poudre de même nature dans des conditions ambiantes, notamment d'hygrométrie, pouvant être considérées comme identiques.

En pratique, cette valeur prédéterminée finale et cette quantité prédéterminée correspondant à une erreur de jetée moyenne sont consignées par des moyens extérieurs, ainsi, dans l'exemple illustré, sous forme de tensions au moyen de potentiomètres.

En outre sont associés au circuit 57 des deuxièmes moyens de consigne 59 pour consigner une évolution idéale du poids de poudre reçu par le récipient 11 en fonction du temps, au cours d'un cycle de dosage.

La figure 3 illustre en I une telle évolution idéale, à titre d'exemple préféré mais non limitatif.

Selon cet exemple, l'évolution I définit deux phases correspondant à deux débits idéaux successifs, constants mais différents, des moyens d'acheminement de poudre vers le récipient de pesage 11, constitués par la goulotte vibrante 4 : de l'instant initial $t_0$ d'un cycle de dosage, où le poids théorique de poudre dans le récipient 11 est nul, à un instant $t_1$ prédéterminé en fonction de l'instant $t_0$ et auquel correspond un poids théorique $P_1$ de poudre dans le récipient 11, le débit est constant et comparativement important alors que de l'instant $t_1$ à un instant final $t_2$ auquel le poids théorique $P_2$ de poudre dans le récipient 11 est inférieur de la quantité prédéterminée correspondant à l'erreur de jetée moyenne à la valeur prédéterminée finale $P_3$ ou dose de poudre à obtenir, ce débit est également constant mais comparativement faible (respectivement zones Ia et Ib de l'évolution I) ; on remarquera qu'à la différence de l'art antérieur, aux instants $T_1$ et $T_2$ prédéterminés en fonction de l'instant $t_0$ sont associés des poids prédéterminés $P_1$ et $P_2$ de poudre dans le récipient 11, du moins si l'on se réfère à l'évolution idéale.

Lors du déroulement d'un cycle de dosage, le circuit 57 établit une comparaison permanente entre le signal $V_{c2}$ et les consignes fournies par les moyens 58 et 59, traduites par des signaux de même nature que $V_{c2}$, c'est-à-dire en tensions électriques dans l'exemple illustré ; en fonction de cette comparaison, le circuit 57 asservit l'amplitude de vibration des moyens moteurs 5 de la goulotte 4, par l'intermédiaire d'un circuit de commande de vibreur 60 à l'entrée duquel est acheminé en continu un signal de sortie du circuit 57, résultant de la comparaison ci-dessus.

Les moyens comparateurs intégrés au circuit 57 assurent à cet effet, à chaque instant d'un cycle de dosage, une comparaison entre le signal $V_{c2}$ représentatif du poids effectif de poudre reçu depuis l'instant initial $t_0$ du cycle par le récipient 11 et :

— d'une part un seuil représentatif d'un poids théorique à cet instant conformément à l'évolution théorique I, pour agir *via* les moyens 60 sur l'amplitude de vibration des moyens moteurs 5 de façon à, respectivement, augmenter ou réduire celle-ci ainsi que, par conséquent, le débit de la goulotte 4 vers le récipient 11 selon que le poids effectif de poudre reçu par le récipient 11 depuis l'instant initial $t_0$ du cycle est inférieur ou supérieur au poids théorique correspondant à l'évolution I (ce qui correspond respectivement à des zones de la courbe d'évolution réelle II située en dessous et au-dessus de la courbe d'évolution théorique I à la figure 3) ; compte tenu de la dissociation de l'évolution théorique I en deux zones Ia et Ib correspondant respectivement à un débit comparativement important et à un débit comparativement faible, on observe ainsi une évolution II du poids effectif de poudre reçu par le récipient 11 à partir de l'instant $t_0$ du type indiqué à la figure 3 à titre d'exemple non limitatif, correspondant à une alternance de zones de l'évolution II respectivement en dessous et au-dessus de l'évolution I dans la zone Ia, avec obtention d'un poids effectif proche de P1 mais rarement égal à $P_1$ à l'instant $t_1$, puis une adaptation progressive, sans oscillation, de l'évolution II à l'évolution I dans la zone Ib de celle-ci, aboutissant à une quasi-identité avec $P_2$ du poids effectif de poudre reçu par le récipient 11 à l'instant $t_2$ ;

— d'autre part à un seuil prédéterminé représentatif de la valeur prédéterminée finale $P_3$ réduite de la quantité prédéterminée correspondant à l'erreur moyenne de jetée, en accord avec les consignes affichées sur les premiers moyens de consigne 58, pour interrompre le fonctionnement des moyens moteurs 5 de la goulotte vibrante 4 à l'instant $t_2$, c'est-à-dire lorsque le récipient a reçu un poids $P_2$ de poudre depuis l'instant initial $t_0$ de telle sorte qu'alors, en laissant s'écouler dans le récipient 11 la poudre résiduelle correspondant à l'erreur de jetée effective, on obtienne, à l'expiration d'un délai prédéterminé suffisant pour cet écoulement, c'est-à-dire pour un instant $t_3$ prédéterminé par rapport à l'instant initial $t_0$, un poids de poudre dans le récipient 11 égal à $P_3$ ou voisin de $P_3$ à l'éventuelle différence entre l'erreur de jetée effective et l'erreur de jetée moyenne prédéterminée près ; les moyens moteurs 5 ne pourront être mis en route qu'à l'instant initial du cycle suivant, dans l'hypothèse où seront remplies les conditions imposées à cet effet par les moyens de remise à zéro 54 et plus précisément par les moyens de consigne 55 associés à ceux-ci, ce qui implique en particulier un vidage du récipient 11 entre temps.

La concordance du poids effectif de poudre reçu à l'instant $t_3$, depuis l'instant $t_0$, par le récipient de pesage 11 est néanmoins contrôlée, avant le vidage de celui-ci, par un circuit 61 de contrôle des doses à l'entrée duquel le signal $V_{c2}$ est acheminé parallèlement à son acheminement au circuit 57 d'acheminement de la poudre vers le récipient.

A ce circuit 61 sont associés des moyens de consigne 62 pour consigner les tolérances de dosage, c'est-à-dire une limite admissible supérieure à une limite admissible inférieure du poids effectif de poudre reçu à l'instant $t_3$ par le récipient de pesage 11, autour de la valeur prédéterminée finale ou dose $P_3$ à obtenir ; transformées en signaux de même nature que $V_{c2}$, c'est-à-dire en tensions électriques dans l'exemple illustré, les deux limites consignées dans les moyens 62 sont acheminées à un comparateur intégré au circuit 61 et qui leur compare le signal $V_{c2}$ et, selon que celui-ci correspond à un poids effectif de poudre situé entre ces limites ou en dehors d'elles, définit une pesée respectivement bonne ou mauvaise et agit de façon appropriée sur le vérin 52 pour orienter convenablement l'entonnoir de transit 50 comme il a été dit plus haut, avant d'actionner le vérin 65 dans le sens du déversement du récipient 11 dans cet entonnoir 50 ; on a désigné par la référence générale 63 le circuit, piloté par le circuit 61, assurant successivement cette orientation de l'entonnoir de transit 50 et le déversement du récipient 11, puis son retour à la position initiale dans laquelle l'ouverture 38 est tournée vers le haut en vue de l'accomplissement de l'éventuel cycle de dosage suivant.

Un cycle de dosage complet va à présent être décrit notamment en référence aux figures 3 et 4.

On supposera que le récipient 11 occupe sa position illustrée aux figures 1 et 2, dans laquelle son ouverture 38 est tournée vers le haut, après avoir subi un déversement l'ayant théoriquement vidé de la poudre qu'il contenait éventuellement ; la goulotte 4 est immobile, ses moyens moteurs 5 étant à l'arrêt, et la poudre que peut éventuellement porter son fond 6 ne s'en écoule pas.

Le déclenchement d'un cycle de dosage peut alors être provoqué soit par intervention d'un opérateur, soit automatiquement, lorsque le dispositif est intégré à une chaîne de fabrication, et ce déclenchement fixe l'instant initial $t_0$ évoqué plus haut.

Le capteur 13 émet à cet instant un signal $V_c$ que le circuit de mise en forme 53 transforme en un signal $V_{c1}$ prenant en compte une éventuelle dérive du capteur 13 et par ailleurs représentatif d'un certain poids de poudre pouvant être resté dans le récipient 11 lors de la pesée précédente ; ce signal est comparé, dans les moyens de remise à zéro 54, avec les limites consignées en 55 et, s'il se situe en dehors de ces limites, l'alarme 56 se déclenche pour signaler que la quantité de poudre évacuée du récipient 11 à la fin du cycle précédent ne correspondait pas à la dose pesée ; en outre, si la valeur de $V_{c1}$ à l'instant $t_0$ est supérieure à la limite supérieure consignée en 55, ce qui signifie qu'une quantité excessive de poudre est restée collée dans le récipient 11 lors du déversement de celui-ci, la poursuite du cycle est empêchée jusqu'à ce que l'on ait dégagé du récipient 11 la poudre ainsi retenue ; en dehors de ce cas, la remise à zéro s'effectue normalement et, compte tenu de ce que la valeur du signal $V_{c2}$ de sortie des moyens de remise à zéro 54 est alors nulle, c'est-à-dire inférieure aux consignes des moyens 58 et 62, les moyens moteurs 5 se mettent en route et le cycle se poursuit de la façon suivante, s'accompagnant à chaque instant de l'émission, à la sortie des moyens de remise à zéro 54, d'un signal $V_{c2}$ dont la valeur est représentative de la quantité effective de poudre reçue par le récipient 11 de la goulotte vibrante 4.

Au démarrage des moyens moteurs 5, le débit de poudre hors de la goulotte 4 est généralement faible et la courbe II d'évolution du poids effectif de poudre dans le récipient 11 est généralement située en dessous de la courbe I d'évolution théorique, comme il est illustré ; compte tenu de la comparaison qui s'effectue dans les moyens 57 entre les deux courbes, à chaque instant du cycle à partir de l'instant $t_0$, ces moyens 57 constatant la différence existant alors de ce fait à chaque instant entre le poids théorique et le poids effectif, inférieur au poids théorique, provoquent *via* les moyens 60 de commande du vibreur une augmentation de l'amplitude de vibration de celui-ci, ce qui augmente le débit de la goulotte vibrante 4 qui croît progressivement jusqu'à devenir nettement supérieur à la pente du segment de droite Ia correspondant à l'évolution théorique I si l'on se réfère à la figure 2, si bien qu'en un instant t' intermédiaire entre l'instant $t_0$ et l'instant prédéterminé $t_1$, le poids effectif de poudre reçu par le récipient 11 égale le poids théorique, ce qui constate le comparateur du circuit 57 qui donne l'ordre au circuit 60 de commande des moyens moteurs 5 de réduire l'amplitude de vibration, c'est-à-dire le débit ; compte tenu de l'inertie du système, le poids effectif de poudre reçu par le récipient 11 après l'instant t' est supérieur au poids théorique indiqué par la partie Ia de l'évolution I, et l'ordre de réduction de l'amplitude de vibration des moyens moteurs 5, c'est-à-dire du débit, se poursuit si bien que le débit effectif devient inférieur à la pente du tronçon Ia et que, à un instant t" intermédiaire en t' et $t_1$, le poids effectif devient à nouveau égal au poids théorique et la courbe II croise à nouveau la courbe I ; on observe alors un phénomène analogue à celui qui se produit entre $t_0$ et t', le comparateur du circuit 57 constatant un poids effectif reçu par le récipient 11 depuis l'intant $t_0$ inférieur au poids théorique et agissant de ce fait dans le sens d'une augmentation de l'amplitude de vibration des moyens moteurs 5, c'est-à-dire de l'augmentation du débit de la goulotte 6.

On observera qu'au fur et à mesure de ses alternances autour du tronçon Ia de la courbe d'évolution théorique du poids de poudre dans le récipient 11, la courbe II d'évolution réelle de ce poids approxime progressivement la courbe d'évolution théorique ; pour des raisons de clarté, on a limité à deux le nombre d'intersections des deux courbes entre l'instant initial $t_0$ et l'instant prédéterminé $t_1$, mais ce nombre pourrait être en réalité différent, et notamment plus grand afin de permettre une identification aussi bonne que possible de la courbe II au tronçon Ia avant l'instant $t_1$, où s'effectue la transition entre la zone Ia de débit comparativement important et la zone Ib de débit comparativement faible.

Après l'instant $t_1$, la comparaison entre le poids effectif de poudre reçu par le récipient 11 depuis l'instant initial $t_0$ s'effectue avec la partie Ib de la courbe d'évolution théorique I, laquelle zone Ib est dans l'exemple illustré un segment de droite dont la pente est beaucoup plus faible que celle du segment de droite constituant la zone Ia ; compte tenu de la plus faible valeur du débit théorique dans cette zone, la comparaison entre le poids effectif de poudre reçu depuis l'instant initial $t_0$ par le récipient 11 et le poids théorique à chaque instant entre $t_1$ et $t_2$ se traduit par des variations plus faibles du débit réel, et le cas échéant même par une absence d'oscillation du poids effectif autour du poids théorique, comme c'est le cas dans l'exemple illustré où, le poids effectif étant supérieur au poids théorique immédiatement après l'instant $t_1$, la courbe d'évolution réelle II se confond progressivement avec la zone Ib de la courbe d'évolution théorique I, sans que le poids réel devienne inférieur au poids théorique en un quelconque instant entre $t_1$ et $t_2$, la fusion des deux courbes étant totale dès avant l'instant $t_2$, ce qui se traduit par une amplitude constante de vibration des moyens moteurs 5 de la goulotte 4 et un débit constant de celle-ci, correspondant à la pente de la zone Ib ; de ce fait, à l'instant prédéterminé $t_2$, le récipient 11 a reçu un poids effectif de poudre coïncidant avec un maximum de précision avec le poids $P_2$ déterminé par déduction, de la dose $P_3$ à obtenir, d'une quantité correspondant à l'erreur de jetée moyenne déterminée par exemple empiriquement.

Lorsque le comparateur du circuit 57 constate la réception depuis l'instant initial $t_0$, par le récipient de pesage 11, un poids de poudre correspondant à $P_2$, à l'instant $t_2$, il provoque *via* le circuit 60 de l'arrêt des moyens moteurs 5, c'est-à-dire l'immobilisation de la goulotte 4 d'où s'écoule alors après l'instant $t_2$, une quantité de poudre correspondant à l'erreur de jetée effective, plus ou moins proche de l'erreur de jetée moyenne prédéterminée.

A un instant $t_3$ prédéterminé en référence à l'instant initial $t_0$, et correspondant à l'écoulement, depuis l'instant $t_2$, d'une durée suffisante pour permettre l'arrêt de toute chute de poudre de la goulotte 4 du fait de l'erreur de jetée, le circuit 61 de contrôle des doses compare la valeur de $V_{c2}$ aux limites consignées en 62 afin de déterminer si le poids effectif de poudre reçu par le récipient 11 depuis l'instant initial $t_0$ se situe entre ces limites, auquel cas la dose est bonne et l'entonnoir de transit 50 orienté en conséquence par une action appropriée du circuit de vidage 63 sur le vérin 52, ou si elle se situe en dehors de ces limites, auquel cas la dose est mauvaise et les moyens 63 agissent en conséquence sur les vérins 52 d'orientation de l'entonnoir de transit 50, puis les moyens 63 provoquent, par action sur le vérin 45, le basculement du récipient 11 dans le sens 41 du déversement, puis en retour à la position dans laquelle son ouverture 38 est tournée vers le haut en vue d'un nouveau cycle ; lors du fonctionnement du vérin 45, l'amortisseur hydraulique 46 évite la transmission, au récipient 11 et au capteur 13, de vibrations qui pourraient détériorer celui-ci.

Un cycle de dosage est alors terminé, et un autre cycle peut éventuellement commencer.

Naturellement, le mode de mise en œuvre du procédé et du dispositif selon l'invention qui vient d'être décrit ne constitue qu'un exemple non limitatif, auquel on pourra apporter de nombreuses variantes sans sortir pour autant du cadre de la présente invention ; en particulier, la nature des signaux émis et comparés aux différentes étapes du procédé, des tensions électriques dans l'exemple non limitatif décrit ci-dessus, pourra être différente, aussi bien analogique que numérique, et les composants des circuits mis en œuvre seront choisis en conséquence par l'homme du métier, dans le cadre de ses aptitudes normales ; la réalisation pratique des circuits décrits en référence à la figure 4 est également du domaine des aptitudes normales de l'homme du métier, et on remarquera que cette réalisation pratique peut faire appel à des moyens particulièrement simples, et peu coûteux.

## Revendications

1. Procédé de dosage pondéral d'une poudre, mettant en œuvre une balance (12) munie d'un récipient de pesage (11) et de moyens (13) de mesure en continu du poids effectif du contenu éventuel du récipient (11), et des moyens (4, 5) positifs d'acheminement d'une poudre à doser vers le récipient de pesage (11), consistant, lors d'un cycle de dosage, à faire fonctionner les moyens d'acheminement (4, 5) d'un instant initial $(t_0)$ où le récipient (11) est théoriquement vide à un instant final $(t_2)$ où le récipient (11) a reçu des moyens d'acheminement (4, 5), depuis l'instant initial, un poids de poudre d'une valeur prédéterminée $(P_2)$ inférieure à une valeur prédéterminée finale à obtenir $(P_3)$ d'une quantité correspondant $(P_3-P_2)$ à une erreur de jetée moyenne des moyens d'acheminement (4, 5), à interrompre à cet instant final $(t_2)$ le fonctionnement des moyens d'acheminement (4, 5) et à laisser ensuite s'écouler dans le récipient (11) la poudre résiduelle correspondant à l'erreur de jetée effective, caractérisé en ce que l'on prédétermine ledit instant final $(t_2)$ en référence à l'instant initial $(t_0)$, ainsi qu'une évolution idéale (I) du poids de poudre reçu par le récipient (11) en fonction du temps de l'instant initial $(t_0)$ à l'instant final $(t_2)$, et en ce que, à chaque instant dudit fonctionnement des moyens d'acheminement (4, 5), on compare le poids effectif de poudre reçu par le récipient (11) depuis l'instant initial $(t_0)$ et un poids théorique conforme à ladite évolution idéale (I) et l'on agit en continu sur ledit fonctionnement en fonction des résultats de cette comparaison, pour augmenter le débit si le poids effectif est inférieur au poids théorique à l'instant considéré ou pour réduire le débit si le poids effectif est supérieur au poids théorique à l'instant considéré, et adapter ainsi l'évolution (II) du poids effectif de poudre reçu depuis l'instant initial $(t_0)$ par le récipient (11), lors du fonctionnement des moyens d'acheminement (4, 5), à l'évolution idéale (I).

2. Procédé de dosage selon la revendication 1, caractérisé en ce que l'on prédétermine l'évolution idéale (I) du poids de poudre reçu dans le récipient (11) en fonction du temps de façon à définir un débit comparativement important de l'instant initial $(t_0)$ à un instant intermédiaire $(t_1)$ prédéterminé en référence à l'instant initial $(t_0)$ et un débit comparativement faible à l'instant intermédiaire $(t_1)$ à l'instant final $(t_2)$.

3. Procédé de dosage selon l'une quelconque des revendications 1 et 2, caractérisé en ce que l'on prédétermine de façon empirique ladite quantité correspondant à une erreur de jetée moyenne.

4. Procédé de dosage selon l'une quelconque des revendications 1 à 3, caractérisé en ce que l'on prédétermine une limite admissible supérieure et une limite admissible inférieure autour de ladite valeur prédéterminée finale $(P_3)$ et en ce que, à l'expiration d'un délai prédéterminé suffisant pour l'écoulement dans le récipient (11), après l'instant final $(t_2)$, de la poudre résiduelle correspondant à l'erreur de jetée effective, on compare le poids effectif de poudre reçu par le récipient (11) auxdites limites, pour définir une pesée bonne ou mauvaise selon que, respectivement, ce poids effectif est situé entre ces limites ou en dehors d'elles.

5. Procédé de dosage selon l'une quelconque des revendications 1 à 4, caractérisé en ce que l'on détermine à chaque instant le poids effectif de poudre reçu des moyens d'acheminement (4, 5), par le récipient (11), depuis l'instant initial $(t_0)$ en déduisant, de la valeur mesurée fournie à l'instant considéré par les moyens de mesure (13), la valeur mesurée fournie par ces derniers à l'instant initial $(t_0)$.

6. Procédé de dosage selon la revendication 5, caractérisé en ce que l'on prédétermine une limite supérieure positive et une limite inférieure négative à la valeur mesurée fournie par les moyens de mesure (13) à l'instant initial $(t_0)$ de chaque cycle et, selon que cette valeur est située entre ou en dehors de ces limites, respectivement, on définit un dosage précédent bon ou mauvais en refusant le déroulement du cycle si cette valeur dépasse la limite supérieure.

7. Procédé de dosage selon l'une quelconque des revendications 1 à 6, mettant en œuvre une goulotte d'écoulement vibrante (4) à titre de moyens positifs d'acheminement (4, 5), caractérisé en ce que l'on pratique ladite action continue sur le fonctionnement de ces moyens (4, 5) en agissant en continu sur l'amplitude de vibration de la goulotte (4), en l'augmentant pour augmenter le débit ou en la ralentissant pour réduire le débit.

8. Dispositif de dosage pondéral d'une poudre pour la mise en œuvre du procédé selon l'une quelconque des revendications précédentes, comportant : une balance (12) munie d'un récipient de pesage (11) et de moyens (13) de mesure en continu du poids effectif du contenu éventuel du récipient (11), émettant à chaque instant un premier signal $(V_{c2})$ représentatif de ce poids, des moyens positifs (4, 5) d'acheminement d'une poudre à doser vers le récipient de pesage (11), débouchant à l'aplomb de celui-ci, caractérisé en ce qu'il comporte en outre : des premiers moyens de consigne (58) pour consigner une valeur prédéterminée finale (P₃) du poids de poudre à obtenir et une quantité prédéterminée (P₃-P₂) correspondant à une erreur de jetée moyenne d'acheminement (4, 5), des deuxièmes moyens de consigne (59), pour consigner une évolution idéale (I) du poids de poudre reçu par le récipient (11) en fonction du temps, au cours d'un cycle de dosage, un premier comparateur (57) comparant à chaque instant le premier signal (V$_{c2}$) d'une part à un seuil prédéterminé représentatif de ladite valeur prédéterminée finale (P₃) réduite de ladite quantité prédéterminée (P₃-P₂) et d'autre part à un seuil représentatif d'un poids théorique à cet instant, conformément à ladite évolution théorique (II), pour émettre un deuxième signal, en fonction de cette comparaison, des moyens (60) d'asservissement continu du fonctionnement et du débit des moyens d'acheminement (4, 5) au deuxième signal.

9. Dispositif de dosage selon la revendication 8, caractérisé en ce qu'il comporte en outre des troisièmes moyens de consigne (62) pour consigner une limite admissible supérieure et une limite admissible inférieure autour de ladite valeur prédéterminée finale (P₃), un deuxième comparateur (61) comparant le premier signal (V$_{c2}$) et lesdites limites admissibles respectivement supérieure et inférieure, et des moyens (61) de définition d'une pesée bonne ou mauvaise en fonction de cette comparaison.

10. Dispositif de dosage selon l'une quelconque des revendications 8 et 9, caractérisé en ce que les moyens (13) de mesure en continu du poids effectif du contenu du récipient comportent des moyens (54) de remise à zéro.

11. Dispositif de dosage selon la revendication 10, caractérisé en ce qu'il comporte des quatrième moyens de consigne (56) pour consigner deux limites de remise à zéro, un troisième comparateur (54) comparant la remise à zéro effective avec ces limites, et des moyens d'alarme (56) pilotés par le troisième comparateur (54) en fonction de cette comparaison.

12. Dispositif de dosage selon l'une quelconque des revendications 8 à 11, caractérisé en ce que les moyens (13) de mesure en continu du poids effectif du contenu du récipient (11) comportent un capteur (13) à jauges de contrainte (23, 24, 25, 26) logé dans un boîtier (31) et en ce qu'il est prévu des moyens d'alimentation dudit boîtier (31) en air sous une pression supérieure à la pression ambiante.

13. Dispositif de dosage selon l'une quelconque des revendications 8 à 12, caractérisé en ce que les moyens positifs (4, 5) d'acheminement d'une poudre à doser vers le récipient (11) comportent une goulotte (4) disposée sous une trémie (2) de stockage de poudre et munie de moyens moteurs (5) la faisant vibrer pour provoquer l'acheminement de la poudre, via la goulotte, de la trémie (2) au récipient de pesage (11), et en ce que les moyens d'asservissement continu du fonctionnement et du débit des moyens d'acheminement (4, 5) au deuxième signal comportent des moyens pour asservir à celui-ci la présence, l'absence, l'amplitude de vibration des moyens moteurs (5).

**Claims**

1. Process for dispensing a powder by weight, employing in weighing machine (12) equipped with a weighing receptacle (11) and means (13) for continuously measuring the actual weight of the optional content of the receptacle (11), and positive means (4, 5) for conveying a powder to be dispensed towards the weighing receptacle (11), consisting, during a dispensing cycle, in causing the conveying means (4, 5) to operate from an initial instant (t₀) when the receptacle (11) is theoretically empty to a final instant (t₂) when the receptacle (11) has received from the conveying means (4, 5), since the initial instant, a weight of powder of a predetermined value (P₂) smaller than a predetermined final value to be obtained (P₃) by a quantity corresponding (P₃-P₂) to a mean throw error of the conveying means (4, 5), in interrupting at this final instant (t₂) the operation of the conveying means (4, 5) and in then allowing the remaining powder corresponding to the actual throw error to flow into the receptacle (11), characterized in that the said final instant (t₂) is predetermined with reference to the initial instant (t₀) as is also an ideal change (I) in the weight of powder received by the receptacle (11) as a function of the time from the initial instant (t₀) to the final instant (t₂), and in that, at each instant of the said operation of the conveying means (4, 5), the actual weight of powder received by the receptacle (11) since the initial instant (t₀) is compared with a theoretical weight according to the said ideal change (I) and that the said operation is continuously modified as a function of the results of this comparison, to increase the flow rate if the actual weight is less than the theoretical weight at the instant in question or to reduce the flow rate if the actual weight is more than the theoretical weight at the instant in question, and thus to adapt the change (II) in the actual weight of powder received since the initial instant (t₀) by the receptacle (11), during the operation of the conveying means (4, 5), to the ideal change (I).

2. Process for dispensing by weight according to Claim 1, characterized in that the ideal change (I) of the weight of powder received in the receptacle (11) as a function of time is predetermined so as to define a comparatively high flow rate from the initial instant (t₀) to an intermediate instant (t₁) predetermined with reference to the initial instant (t₀) and a comparatively low flow rate from the intermediate instant (t₁) to the final instant (t₂).

3. Process for dispensing by weight according to either of Claims 1 and 2, characterized in that the said quantity corresponding to a mean throw error is predetermined empirically.

4. Process for dispensing by weight according to any one of Claims 1 to 3, characterized in that a permissible upper limit and a permissible lower limit are predetermined around the said predetermined final value $(P_3)$ and in that, at the end of a predetermined period which is sufficient for the remaining powder corresponding to the actual throw error to flow into the receptacle (11) after the final instant $(t_2)$, the actual weight of powder received by the receptacle (11) is compared with the said limits, to define a satisfactory or unsatisfactory weighing according to wether this actual weight lies within these limits or outside these, respectively.

5. Process for dispensing by weight according to any one of Claims 1 to 4, characterized in that the actual weight of powder received from the conveying means (4, 5) by the receptacle (11) since the initial instant $(t_0)$ is determined at each instant by substracting from the meared value supplied by the measuring means (13) at the instant in question the measured value supplied by the latter at the initial instant $(t_0)$.

6. Process for dispensing by weight according to Claim 5, characterized in that a positive upper limit and a negative lower limit to the measured value supplied by the measuring means (13) are predetermined at the initial instant $(t_0)$ of each cycle and, depending on whether this value lies within or outside these limits, respectively, a satisfactory or unsatisfactory previous dispensing by weight is defined, the continuation of the cycle being disallowed if this value exceeds the upper limit.

7. Process for dispensing by weight according to any one of Claims 1 to 6, employing a vibrating flow spout (4) as positive conveying means (4, 5), characterized in that the said continuous modification of the operation of these means (4, 5) is performed by continuously modifying the amplitude of vibration of the spout (4), increasing it to increase the flow rate or slowing it down to reduce the flow rate.

8. Device for dispensing a powder by weight for implementing the process according to any one of the preceding claims, comprising : a weighing machine (12) equipped with a weighing receptacle (11) and means (13) for continuously measuring the actual weight of the optional content of the receptacle (11), emitting at each instant a first signal $(V_{c2})$ representing this weight, positive means (4, 5) for conveying a powder to be dispensed by weight towards the weighing receptacle (11), opening out vertically above the latter, characterized in that it additionally comprises : first recording means (58) for recording a final predetermined value $(P_3)$ of the weight of powder to be obtained and a predetermined quantity $(P_3-P_2)$ corresponding to a mean throw error of the conveying means (4, 5), second recording means (59), for recording an ideal change (I) of the weight of powder received by the receptacle (11) as a function of time, during a dispensing cycle, a first comparator (57) comparing the first signal $(V_{c2})$ at each instant, on the one hand with a predetermined threshold representing the said final predetermined value $(P_3)$

reduced by the said predetermined quantity $(P_3-P_2)$ and, on the other hand, with a threshold representing a theoretical weight at this instant, in accordance with the said theoretical change (II), to emit a second signal, as a function of this comparison, and means (60) for continuously making the operation and the flow rate of the conveying means (4, 5) subject to automatic control by the second signal.

9. Dispensing device according to Claim 8, characterized in that it additionally comprises third recording means (62) for recording an upper permissible value and a lower permissible value around the said final predetermined value $(P_3)$, a second comparator (61) comparing the first signal $(V_{c2})$ with the said upper and lower permissible limits, respectively, and means (61) for defining a satisfactory or unsatisfactory weighing as a function of this comparison.

10. Dispensing device according to either of Claims 8 and 9, characterized in that the means (13) for continuously measuring the actual weight of the content of the receptacle comprise means (54) for zeroing.

11. Dispensing device according to Claim 10, characterized in that it comprises fourth recording means (56) for recording two zeroing limits, a third comparator (54) comparing the actual zeroing with these limits, and alarm means (56) controlled by the third comparator (54) as a function of this comparison.

12. Dispensing device according to any one of Claims 8 to 11, characterized in that the means (13) for continuously measuring the actual weight of the content of the receptacle (11) comprise a sensor (13) with strain gauges (23, 24, 25, 26) which is housed in a case (31) and in that means are provided for supplying the said case (31) with air at a pressure above ambient pressure.

13. Dispensing device according to any one of Claims 8 to 12, characterized in that the positive means (4, 5) for conveying a powder to be dispensed towards the receptacle (11) comprise a spout (4) arranged under a hopper (2) for storing powder and equipped with driving means (5) making it vibrate to cause the powder to be conveyed, *via* the spout, from the hopper (2) to the weighing receptacle (11) and in that the means for continuously making the operation and the flow rate of the conveying means (4, 5) subject to automatic control by the second signal comprise means for making the presence, the absence and the amplitude of vibration of the driving means (5) subject to continuous control by the latter signal.

**Patentansprüche**

1. Verfahren zur gewichtsmäßigen Dosierung eines Pulvers, unter Inbetriebsetzung einer Waage (12), die mit einer Wägschale (11) und einer kontinuierlich arbeitenden Meßeinrichtung (13) mit dem effektiven Gewicht des eventuellen Inhalts der Wägschale (11) versehen ist sowie mit einem positiven Fördermittel (4, 5) für das zu dosierende Pulver zu der Wägschale (11), wobei während eines Dosierungszyklus das Fördermittel (4, 5) in Gang gesetzt wird ab einem Anfangszeitpunkt ($t_0$), an dem die Wägschale (11) theoretisch leer ist, bis zu einem Endzeitpunkt ($t_2$), an dem die Wägschale (11) seit dem Anfangszeitpunkt von dem Fördermittel (4, 5) ein Pulvergewicht mit einem vorbestimmten Wert ($P_2$) erhalten hat, der kleiner ist als ein zu erhaltender Endwert ($P_3$), und zwar um eine Menge ($P_3$-$P_2$), die einem mittleren bzw. durchschnittlichen Auswurffehler des Fördermittels entspricht, wobei die Funktion bzw. der Betrieb des Fördermittels (4, 5) an diesem Endzeitpunkt ($t_2$) unterbrochen wird und wobei man das restliche, dem effektiven Auswurffehler entsprechende Pulver in die Schale (11) rinnen läßt, dadurch gekennzeichnet, daß der Endzeitpunkt ($t_2$) in bezug auf den Anfangszeitpunkt ($t_0$) sowie eine ideale Entwicklung bzw. Kurve (I) des von der Wägschale (11) aufgenommenen Pulvergewichts in Abhängigkeit von dem Anfangszeitpunkt ($t_0$) bis zum Endzeitpunkt ($t_2$) vorher bestimmt werden und daß zu jedem Zeitpunkt der Funktion bzw. des Betriebs des Fördermittels (4, 5) das ab dem Anfangszeitpunkt ($t_0$) von der Wägschale (11) aufgenommene effektive Pulvergewicht mit einem theoretischen der genannten idealen Kurve (I) entsprechenden Gewicht verglichen und in Abhängigkeit von den Resultaten dieses Vergleichs kontinuierlich auf diese Funktion bzw. diesen Betrieb eingewirkt wird, derart, daß die Fördermenge erhöht wird, wenn das effektive Gewicht zu dem in Betracht gezogenen Zeitpunkt unter dem theoretischen Gewicht liegt, oder verringert wird, wenn das effektive Gewicht zu dem in Betracht gezogenen Zeitpunkt über dem theoretischen Gewicht liegt, und folglich die Kurve (II) des ab dem Anfangszeitpunkt ($t_0$) von der Wägschale (11) aufgenommenen effektiven Gewichts während der Funktion bzw. des Betriebs des Fördermittels (4, 5) an die ideale Kurve (I) angepaßt wird.

2. Dosierungsverfahren nach Anspruch 1, dadurch gekennzeichnet, daß die ideale Entwicklung bzw. Kurve (I) des in der Wägschale (11) aufgenommenen Pulvergewichts in Abhängigkeit von der Zeit derart vorher bestimmt wird, daß eine verhältnismäßig bzw. vergleichsweise große Fördermenge von dem Anfangszeitpunkt ($t_0$) bis zu einem in bezug auf den Anfangszeitpunkt ($t_0$) vorher festgelegten Zwischenzeitpunkt ($t_1$) und eine vergleichsweise geringe Fördermenge von dem Zwischenzeitpunkt ($t_1$) bis zu dem Endzeitpunkt ($t_2$) definiert werden.

3. Dosierungsverfahren nach den Ansprüchen 1 und 2, dadurch gekennzeichnet, daß die einem mittleren bzw. durchschnittlichen Auswurffehler entsprechende Quantität bzw. Menge empirisch ermittelt wird.

4. Dosierungsverfahren nach einem der Ansprüche 1 bis 3, dadurch gekennzeichnet, daß rund um den vorher festgelegten Endwert ($P_3$) eine zulässige Obergrenze und eine zulässige Untergrenze festgelegt werden und daß nach Verstreichen einer vorher festgelegten, ausreichend langen Zeitspanne ab dem Endzeitpunkt ($t_2$) für das Einlaufen des restlichen, dem effektiven Auswurffehler entsprechenden Pulvers in die Schale bzw. den Behälter (11) das effektive Gewicht des durch die Schale (11) aufgenommenen Pulvers mit den genannten Grenzwerten verglichen wird, nämlich zur Definition einer guten oder schlechten Wägung, nach welcher jeweils das effektive Gewicht zwischen diesen Grenzen oder darüber hinaus angesetzt wird.

5. Dosierungsverfahren nach einem der Ansprüche 1 bis 4, dadurch gekennzeichnet, daß zu jedem Zeitpunkt bzw. jederzeit das aus dem Fördermittel (4, 5) in dem Behälter (11) ab dem Anfangszeitpunkt ($t_0$) aufgenommene effektive Gewicht bestimmt wird, indem von dem Meßwert, der zu dem in Betracht gezogenen Zeitpunkt von der Meßeinrichtung (13) geliefert wird, der Meßwert abgezogen wird, der von letzterer zum Anfangszeitpunkt ($t_0$) geliefert wurde.

6. Dosierungsverfahren nach Anspruch 5, dadurch gekennzeichnet, daß eine positive Obergrenze und eine negative Untergrenze für den zum Anfangszeitpunkt ($t_0$) jedes Zyklus durch die Meßeinrichtung (13) gelieferten Meßwert bestimmt wird und daß, je nachdem, ob dieser Wert zwischen oder außerhalb dieser Grenzen liegt, eine vorausgehende gute oder schlechte Dosierung definiert bzw. abgegrenzt wird, wobei der Ablauf des Zyklus verweigert wird, wenn dieser Wert Obergrenze überschreitet.

7. Dosierungsverfahren nach einem der Ansprüche 1 bis 6, unter Ingangsetzung einer schwingenden Ablaufrutsche bzw. -schurre (4) als positives Fördermittel (4, 5), dadurch gekennzeichnet, daß auf die Funktion bzw. den Betrieb des Fördermittels (4, 5) die genannte kontinuierliche Aktion ausgeübt wird, indem kontinuierlich auf die Schwingungsamplitude der Rutsche bzw. Schurre (4) eingewirkt wird, derart, daß diese zum Zwecke der Erhöhung der Fördermenge vergrössert bzw. beschleunigt oder zum Zwecke der Verringerung der Fördermenge verkleinert bzw. verlangsamt wird.

8. Vorrichtung zur Durchführung des Verfahrens zur gewichtsmäßigen Dosierung eines Pulvers nach den vorhergehenden Ansprüchen, mit einer Waage (12), die eine Wägschale (11) und eine kontinuierlich arbeitende Meßeinrichtung (13) zur Messung des dem eventuellen Inhalt der Schale (11) entsprechenden effektiven Gewichts aufweist, welch letztere zu jedem Zeitpunkt ein für dieses Gewicht repräsentatives Signal ($V_{c2}$) ausgibt, und mit einem positiven Fördermittel (4, 5) für ein zu dosierendes Pulver zur Wägschale (11), das senkrecht in letztere mündet, gekennzeichnet durch weiterhin eine erste Einrichtung (58) zum Hinterlegen eines vorher bestimmten Endwerts ($P_3$) des zu erreichenden Gewichts des Pulvers und einer vorher bestimmten Quantität bzw. Menge ($P_3$-$P_2$), die einem mittleren bzw. durchschnittlichen Fehlerauswurf des Förmittels (4, 5) entspricht ; eine zweite Einrichtung (59) zur Hinterlegung einer idealen Gewichtskurve (I) des im Verlauf eines Dosierungszyklus in Abhängigkeit von der Zeit durch die Schale (11) aufgenommenen Pulvers ; eine erste Vergleichseinrichtung (57), die zu jedem Zeitpunkt das erste Signal ($V_{c2}$) einerseits mit einem vorher bestimmten Schwellenwert, der für den vorher festgelegten, um die vorher festgelegte Menge ($P_3$-$P_2$) reduzierten Endwert ($P_3$) repräsentativ ist, vergleicht und andererseits mit einem zu diesem Zeitpunkt für ein theoretisches Gewicht repräsentativen Schwellenwert, und zwar in Übereinstimmung mit der theoretischen Kurve (II), nämlich zur Ausgabe eines von diesem Vergleich abhängigen zweiten Signals ; und eine Einrichtung (60) zur kontinuierlichen Regelung bzw. Steuerung der Funktion und der Fördermenge des Fördermittels (4, 5) auf das zweite Signal.

9. Dosierungsvorrichtung nach Anspruch 8, dadurch gekennzeichnet, daß diese des weiteren eine dritte Einrichtung (62) zur Hinterlegung einer zulässigen Obergrenze und einer zulässigen Untergrenze rund um den vorher festgelegten Endwert ($P_3$) sowie eine zweite Vergleichseinrichtung (61) zum Vergleich des ersten Signals ($V_{c2}$) und der zülassigen Obergrenze bzw. Untergrenze und eine Einrichtung (61) zur Definition einer guten oder schlechten Wägung in Abhängigkeit von diesem Vergleich aufweist.

10. Dosierungsvorrichtung nach den Ansprüchen 8 und 9, dadurch gekennzeichnet, daß die kontinuierlich arbeitende Meßeinrichtung (13) mit einem dem Inhalt der Wägschale entsprechenden Gewicht eine Nullrückstellung (54) aufweist.

11. Dosierungsvorrichtung nach Anspruch 10, dadurch gekennzeichnet, daß diese eine vierte Einrichtung (56) zur Hinterlegung zweier Nullrückstellungsgrenzen sowie eine dritte Vergleichseinrichtung (54) zum Vergleich der effektiven Nullrückstellung mit diesem Grenzen und eine in Abhängigkeit von diesem Vergleich durch die dritte Vergleichseinrichtung (54) gesteuerte Alarmeinrichtung (56) aufweist.

12. Dosierungsvorrichtung nach einem der Ansprüche 8 bis 11, dadurch gekennzeichnet, daß die kontinuierlich arbeitende Meßeinrichtung (13) mit einem dem Inhalt der Wägschale (11) entsprechenden effektiven Gewicht einen Fühler (13) in Form eines Dehnungsmeßstreifens (23, 24, 25, 26) aufweist, der in einem Gehäuse (31) untergebracht ist, und daß eine Einrichtung zur Versorgung des Gehäuses (31) mit Luft unter einem Druck vorgesehen ist, der höher ist als der Umgebungs- bzw. Raumdruck.

13. Dosierungsvorrichtung nach einem der Ansprüche 8 bis 12, dadurch gekennzeichnet, daß das positive Fördermittel (4, 5) für die Beförderung eines zu dosierenden Pulvers zu der Schale bzw. dem Behälter (11) eine Rutsche bzw. Schurre (4) aufweist, die unter einem Pulverlagerbunker (2) angeordnet und mit einem sie in Schwingung versetzenden Antriebsmittel (5) versehen ist, derart, daß die Beförderung des Pulvers aus dem Bunker (2) über die Rutsche bzw. Schurre (4) in die Wägschale (11) bewirkt wird, und daß die Einrichtung zur kontinuierlichen Regelung bzw. Steuerung der Funktion und der Fördermenge des Fördermittels (4, 5) auf das zweite Signal eine Einrichtung aufweist, die auf dieses das Vorhandensein, das Fehlen und die Amplitude der Schwingungen des Antriebsmittels (5) regelt bzw. steuert.

## FIG_1

FIG. 3

FIG. 2

FIG_4